# EUROPEAN PATENT SPECIFICATION

(11) **EP 1 365 663 B1**
(45) Date of publication and mention of the grant of the patent: **18.07.2007**
(21) Application number: 02719042.0
(22) Date of filing: 19.02.2002
(51) Int. Cl.: A23L 2/52

(54) **PROCESS, APPARATUS AND COMPOSITION FOR CALCIUM FORTIFICATION OF BEVERAGES**
VERFAHREN, ANLAGE UND ZUSAMMENSETZUNG VON MIT CALZIUM ANGEREICHERTEN GETRÄNKEN,
PROCEDE, DISPOSITIF ET COMPOSITION PERMETTANT D'ENRICHIR DES BOISSONS EN CALCIUM

(30) Priority: 01.03.2001 US 797474
(43) Date of publication of application: 03.12.2003
(73) Proprietor: THE COCA-COLA COMPANY, Atlanta, GA 30313 (US)
(72) Inventor: PALANIAPPAN, Sevugan, Sugar Land, TX 77479 (US); LING, Alvin, Houston, TX 77079 (US); MA, Sheng, Pudong, Shanghai 201204 (CN)
(74) Representative: Campbell, Neil Boyd
(86) International application number: PCT/US2002/005146
(87) International publication number: WO 2002/069743

(56) References cited:
- EP-A- 0 323 667
- US-A- 4 313 370
- US-A- 4 722 847
- US-A- 4 740 380
- US-A- 5 028 446
- US-A- 5 820 903

## Description

### FIELD OF THE INVENTION

The present invention is directed to a process, apparatus and composition for fortifying a beverage with a nutritional supplement. The present invention is additionally directed to a fruit juice beverage having high levels of calcium with minimal calcium precipitate in the beverage.

### BACKGROUND OF THE INVENTION

The production of beverages has grown increasingly complex. Today's consumers drink a widening array of beverages with various flavors and formulations. Many of these consumers purchase fruit juices and fruit drinks for taste and nutritional reasons.

Calcium is recognized as being very important for not only children, but also adults, as it helps in the formation of strong teeth and bones and prevent diseases such as osteoporosis. Calcium is also used in the body as a catalyst for the conversion of prothrombin to thrombin to aid in blood clotting, to increase cell permeability, and to facilitate neural transmission and muscular contracts. Calcium additionally functions as a coenzyme in humans and other living organisms to facilitate various biological reactions.

Dairy products, such as milk, provide the most common source of dietary calcium. Many individuals, however, do not consume adequate quantities of dairy products to provide the Recommended Daily Allowance (RDA) of calcium proposed by the Food and Drug Administration (FDA). Factors leading to this deficiency include taste preferences, lactose intolerance, and the perishable nature of dairy products. Therefore, various processes for the calcium fortification of non-dairy beverages have been developed to meet this need.

Most calcium salts are not highly soluble in water, and therefore, there are problems in the art in developing calcium fortified beverages, such as fruit juices and fruit drink products. Due to the low solubility of certain calcium salts, such as high valency calcium citrate, if too much is added to the fruit juice or fruit drink product, the calcium salts will precipitate out in the beverage. The precipitate usually takes the form of unappealing white particles that are undesirable to many consumers. Additionally, this excess calcium can produce a chalk-like taste in the beverage.

Conventional methods of fortifying beverages with calcium require a two-step process involving first the production of a soluble calcium salt batch and then the addition of the soluble calcium salt batch to the beverage. Even where some reference has been made to a "continuous production" of soluble calcium supplement, the process requires the two-step method of first preparing continuous streams of an acid solution and a calcium base solution into a pre-mix batch, and then combining the pre-mix solution batch to the beverage.

Fruit juice beverages supplemented with Calcium and a process for their production is disclosed for example in prior art US-A-4 722 847.

The prior art does not provide a truly continuous system for producing calcium salts of a desirable valency and immediately mixing with a beverage to provide a calcium fortified beverage. The prior art two-step process is very time and labor consuming. Moreover, the resident mixing time is not controlled sufficiently to prevent calcium precipitation, which is very difficult to avoid in the prior art two-step process.

Accordingly, there is a need for an improved process, apparatus and composition to increase the level of calcium in beverages, such as fruit juices and fruit drinks. There is a need for a beverage having high levels of calcium without the excess calcium precipitate associated with prior art beverages.

### SUMMARY OF THE INVENTION

Accordingly, it is an object of the present invention to provide a method and apparatus for producing a calcium compound to be used to fortify beverages.

It is an object of the present invention to provide a method and apparatus for producing a calcium compound to be used to fortify fruit juice and fruit drink beverages.

It is an object of the present invention to provide a calcium containing composition to be used to fortify beverages.

It is also an object of the present invention to provide a method and apparatus for fortifying beverages with calcium.

It is another object of the present invention to provide a method an apparatus for fortifying fruit juice and fruit drink beverages with calcium.

It is still another object of the present invention to provide a method and apparatus for fortifying fruit juice or fruit drink beverages with calcium with minimal formation of calcium precipitate.

It is another object of the present invention to provide a beverage composition having calcium fortification and minimal calcium precipitation.

The present invention fulfills the above-described objects by providing a method for producing a soluble calcium salt containing composition for fortifying a beverage. The present invention also provides a method for producing a calcium fortified beverage by adding the calcium salt containing composition made by said method to the beverage. The present invention also provides a system and apparatus for achieving the above methods. The present invention also provides a fruit juice beverage having high levels of calcium with minimal calcium precipitate in the beverage.

The present invention overcomes calcium solubility problems by blending a calcium containing base with an acid and allowing the mixture to react for a controlled appropriate residence time to produce calcium salts in solution with minimal precipitation. The non-dairy beverages of the present invention have higher amounts of calcium fortification, but without significant calcium citrate precipitate in the beverage usually associated with these higher levels of calcium. Typically, when higher levels of calcium have been added to the fruit juice or drink beverage, the low solubility resulted in calcium citrate precipitating to form white particles in the beverage. These particles are not visually appealing to the beverage consumer. Therefore, by providing a beverage having higher amounts of calcium fortification but without the calcium citrate precipitate, the present invention provides a product that will be much more appealing to consumers.

More specifically, the present invention provides methods and systems for controlling the relative proportions of mono-, di-, and tri-valent calcium citrate. There is a natural transformation tendency from low-valent calcium citrate (mono- and di-calcium citrate) to high valent calcium citrate (tricalcium citrate) which is the most stable form. However, the increase in valency of the calcium citrate decreases its solubility. Therefore, the invention avoids the production of tri-valent calcium citrate to effectively reduce the presence of precipitating salts.

The present invention also includes a system, apparatus and composition for producing the beverages of the present invention. These calcium-fortified beverages are made by monitoring the production of soluble calcium salts by the passage of an appropriate length of time or pH level in a continuous beverage fortification production system. The method is chosen to help increase the overall calcium-solubility of the beverage while maintaining the desired taste and mouth feel of the beverage such that it will still be acceptable to the consumer.

### BRIEF DESCRIPTION OF THE DRAWING

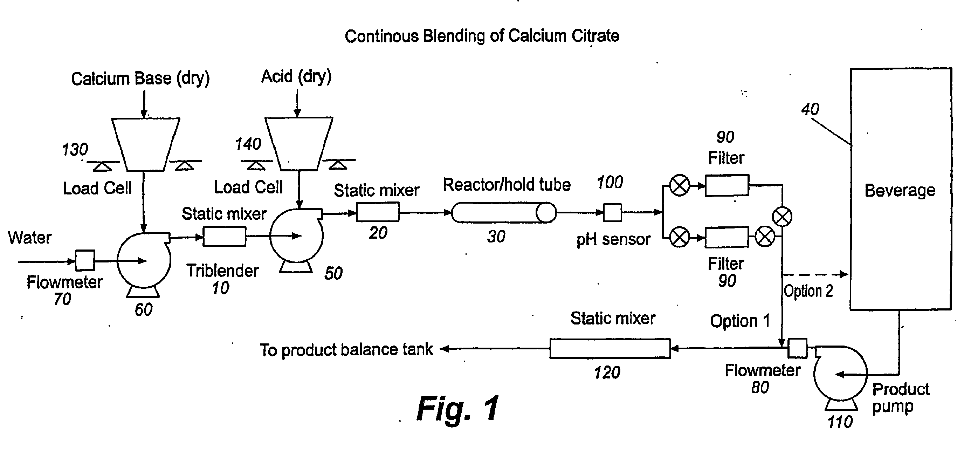

Figure 1 shows a schematic diagram of one system of the present invention.

### DETAILED DESCRIPTION OF THE INVENTION

The present invention is directed to a process for producing a beverage fortified with calcium and having less calcium precipitate associated therewith. The present invention is also directed to an apparatus and system for achieving the process, to soluble calcium salt containing compositions, and to a calcium-fortified beverage produced thereby.

More particularly, the invention provides that a non-dairy beverage is calcium fortified, such as a fruit juice or a fruit drink beverage. Fruit juices which may be used as the beverages in the present invention include, but are not limited to, orange juice, grapefruit juice, lemon juice, lime juice, tangerine juice, apple juice, pear juice, grape juice, cherry juice, berry juice, pineapple juice, peach juice, apricot juice, plum juice, prune juice, passion fruit juice, cranberry juice, or mixtures thereof. Typically, fruit juices contain at least 100% real fruit juice. Fruit drink beverages are those containing less than 100%, but greater than 0%, real fruit juice. The balance of the fruit juice or fruit drink beverages can comprise non-fruit juice ingredients, such as water, sweeteners, gums, flavors, oils, pulps, acidulants, colors, clouds, emulsifiers, stabilizers, or other nutrients, for example.

The calcium in the fruit juice and fruit drink beverages of the present invention is intended to remain soluble in the beverage. Most calcium salts are typically not very soluble in water. Calcium fortification of fruit juice beverages is well known, and many fruit juices, such as orange juice, may have as much as 35-40% of the RDA of calcium per 237 ml (8 ounce) serving. This amount is greater than in milk, which usually has about 30% of the RDA of calcium per 237 ml (8 ounce) serving. Fruit juices may be fortified to this extent due to the solubility of calcium in the fruit juice. Typically, fruit juices, such as orange juice, have higher acidity in the juice, which increases the amount of calcium that can be solubilized in the fruit juice. Calcium fortification of fruit drink beverages has typically been limited to about 10% of the RDA. 10% of the RDA in a 237 ml (8 ounce) serving is equivalent of about 42 mg of calcium per 100 ml of beverage. The present invention will allow the fruit drink beverages to be fortified at levels similar to orange juice.

The invention provides a process and system to produce a calcium compound, preferably calcium citrate, to be mixed with a beverage to simplify and improve the beverage preparation operation. The invention comprises intermittent batch or continuous blending of an aqueous solution of a calcium containing base and an acid to form a blended acid/base solution. The invention further comprises retaining the blended acid base solution in an in-line reaction hold tube, or static mixer, for a controlled amount of time sufficient to produce a calcium salt solution and to avoid precipitation of the calcium salt. Thereafter, the invention provides continuously adding the soluble calcium salt containing solution to a beverage, thereby producing a calcium fortified beverage.

Therefore, the present invention avoids the presence of calcium salt precipitation in the beverage and on the processing apparatus. The invention further provides for automation of the process through continuous stream blending and better control over product specifications.

The invention provides that the calcium containing base is selected from, for example, calcium hydroxide, calcium carbonate, calcium oxide, calcium gluconate, calcium ascorbate, and calcium aspartate, or combinations thereof. In preferred embodiments, the calcium containing base is calcium hydroxide. The invention provides that the acid is preferably citric acid. In addition, the invention can use other acids selected from, for example, fumaric acid, malic acid, phosphoric acid, adipic acid, lactic acid, tartaric acid, and gluconic acid, or combinations thereof.

In particular, the invention provides that the calcium containing base is approximately a 1 to 20% solution, more preferably a 5 to 15% solution, and more preferably a 10% solution of base w/w. In particular, the invention provides that the acid is approximately a 1-50% solution, more preferably a 10-30% solution, and more preferably a 15% acid solution w/w.

The invention provides that the continuous calcium salt solution production and beverage fortification system can be accomplished in several ways. In one embodiment, the continuous system involves the preliminary step wherein the base solution and/or the acid solution can be prepared in individual mixing vessels and then metered accurately into a blend manifold prior to a continuous stream introduction into the retaining reaction, or holding, tube to create the salts for a controlled period of time, and then continuously transfer the soluble salts in-line to the beverage.

Base and acid solutions can also be prepared directly in the process from dry powders and water using high shear mixers, such as Triblender, without the need for separate mixing tanks prior to introduction into the retaining reaction tube and in-line continuous controlled release to the beverage. Powder delivery systems using load cells for example can be used to accurately meter the powered base or acid into a water stream. The stream of water is supplied at a rate compatible with production rates, and the acid and the base are added at corresponding rates. This means that depending on the flow rate of juice processed, the amount of calcium added can be varied within the limit of the in-line blending system design. This is another advantage of the present continuous blending system.

Therefore, the invention provides that each step of the method can be performed in a controlled discrete operation to produce a finished beverage. Alternatively, the method is adapted such that each step is continuously performed to produce a batch of beverage. Any suitable method for uniformly mixing together diverse materials streams can be used, such as homogenizers, purifiers, and surge tank systems with normal agitation and static mixers. Suitable static mixers include commercially available Komax units. Except for the juice base that should be stored at a temperature between -5 and +5°C all other components of the beverage should be maintained at a temperature between 1° and 30°C.

The invention provides that the blended acid/base solution is stored in a retaining reaction tube for a controlled amount of time sufficient to produce a calcium salt solution and to avoid precipitation of the calcium salt before in-line transfer to the beverage. In certain embodiments, the sufficient amount time lasts for about 10 to 300 seconds. In a preferred embodiment, the blended solution is retained in the reactor for about 20 to 240 seconds. More preferably, the reaction time lasts for about 30 to 120 seconds. More preferably, the reaction time lasts for about 50+/-10 seconds. The length of the retaining reaction tube is variable depending upon the desired flow rate and residence time required, which in turn, depends on the concentration of stock solutions and temperature, determinable by one of skill in the art in view of the present disclosure.

The invention provides that the residence time of the solution in the retaining reaction tube can be controlled using a back pressure valve, and by pumping the solution stream using a positive displacement pump, or using a centrifugal pump and a control valve, for example. The diameter and length of the holding tube, or retaining reaction tube, is variable depending upon the flow rate of acid and base solution, which is determined by the desired production rate of the final product. In practice, it is preferable to adjust the flow rates to optimize the soluble calcium salt production and minimize the precipitation of salts. A typical flow rate range within the holding tube is between about 7.6 and 113.6 ℓ/min (2 and 30 gallons per minute). The diameter of the holding tube is preferably between about 1.3 and 7.6 cm (0.5 inch and 3.0 inch), depending upon the desired flow rate, and the corresponding holding tube length is preferably between about 1.5 and 107 meter (5 feet and 350) feet, and more preferably 1.5 and 30.5 meter (5 to 100 feet). Such an in-line holding tube is easily fabricated from piping or is commercially available from food processing equipment suppliers. The holding tube can have multiple shut-off and/or diverter valves along the length thereof. In a configuration for continuous introduction of a stream of calcium salt solution into a continuous stream of beverage, a preferred diameter of the holding tube is about 5 to 38cm (2 to 15 inches), whereas in a configuration for continuous introduction of a stream of calcium salt solution into a batch of beverage, a preferred diameter of the holding tube is about 15 to 30 inches.

The invention provides that the time sufficient to produce a calcium salt solution and to avoid precipitation of the calcium salt can also be monitored with the assistance of a pH meter measuring the pH of the acid/base solution. Preferably the pH meter is located at the downstream end of, or below, the retaining reaction tube. The pH is measured to optimize the formation of the preferred calcium salts (i.e. mono- and di-calcium citrate). The optimum pH range for the preferable form of calcium salts is between approximately 3.5-5.3, more preferably between approximately 4.0 - 5.0, and with a more preferred pH value of approximately 4.3. The pH meter can be connected through an electronic feedback mechanism to divert unstable and insoluble calcium salt solutions appropriately. A process controller can take appropriate actions for any deviation in pH reading. This method allows automated adjustment of the reaction time to assure the minimum precipitation of calcium salts in beverages.

As mentioned, the reaction time can be controlled by adjusting the pumps/flow rate of the acid and base solutions. The reaction time can alternatively be controlled by a release valve on the holding tube. The invention provides calcium fortified beverage substantially free of calcium salt precipitation. By "substantially free" of calcium salt precipitation is meant having a calcium salt precipitation content of no great than 10% w/w, preferably less than 5% w/w and, preferably less than 1% w/w.

Furthermore, the invention provides that the calcium salt solution is added to a beverage in a continuous manner in-line as it is optimally produced substantially free of precipitate, thereby producing a calcium fortified beverage. In preferred embodiments wherein the acid is citric acid, the salt is calcium citrate. The soluble calcium salt can be continuously added to the beverage either in a blend tank, or to a continuous stream of beverage flowing through a pipe. Continuous blending of the calcium salt solution and beverage requires thorough mixing of the right proportion, which can be controlled easily by adjusting flow rates of individual ingredients. For orange juice, typically a 35% RDI (350 mg per 237 ml (8-oz.) serving) of calcium is incorporated into the finished product.

Therefore, the invention provides an apparatus and system for producing a calcium fortified beverage. One embodiment of this apparatus is shown in **Figure 1.** The apparatus comprises an in-line static mixer **10** for mixing calcium containing base with water, and a second in-line static mixer **20** in downstream fluid communication with the first in-line static mixer **10** for mixing acid with aqueous base solution. The dry ingredients (base and acid) can be introduced in the water stream from an automatic loss-in-weight powder feeding systems **130** and **140.** The invention provides an in-line retaining reaction (holding) tube **30** in downstream fluid communication with the second in-line static mixer **20** for holding aqueous acid/base solution for a controlled amount of time sufficient to produce a calcium salt solution and to avoid precipitation of calcium salt. In alternative embodiments discussed above, the base and acid could be mixed in separate vessels, such as tanks, mixers or any suitable container, at appropriate concentrations and then mixed together continuously at calculated ratios using an in-line mixer before going into the retaining reaction tube **30.**

The apparatus further comprises a beverage dispenser **40** in downstream fluid communication with the tube **30** for continuously combining the calcium salt solution with beverage, thereby producing a calcium fortified beverage. As discussed above, the calcium salt solution produced by the controlled method can be added directly to the beverage dispenser **40,** or it can be combined with a continuous stream of beverage flowing from the beverage dispenser **40** aided by a displacement pump **110.** Both options are shown in **Figure 1.** In embodiments where the calcium salt solution is directly added to the beverage dispenser, the salt solution is preferably produced at a generally higher flow rate, and is then added to the beverage dispenser already containing at least some juice therein.

The apparatus shown in **Fig. 1** can further comprise an aqueous base solution displacement pump **60** to blend the base solution. The invention can further comprise an aqueous acid solution displacement pump **50.** The apparatus can comprise a flow meter **70** upstream of the base solution mixer to monitor the incoming water flow rate. The incoming water flow rate is controlled by a feedback mechanism using either a valve or pump as necessary (not shown). Further, the apparatus can comprise a flow meter **80** downstream of the beverage pump **110** for monitoring the beverage flow. The apparatus can comprise one or more filters **90** at any stage. Another set of filters (not shown) can be used downstream of base solution mixer **10** and upstream of pump **50** to remove any large insoluble particles.

The invention provides a pH sensor **100** located downstream of the in-line reactor **30** for providing information as to the progress of the calcium salt reaction. An information feedback mechanism between the pH sensor **100** and the pump **50** can permit the adjustment of flow rate to optimize the creation of soluble calcium salts and minimize the creation of precipitate. In the event of calcium precipitation as determined by monitoring the pH, the insoluble calcium salt solution can be diverted away from the beverage dispenser or beverage stream (not shown).

Once the calcium-fortified beverage has been produced, it may be subjected to additional process steps. These steps include, but are not limited to, additional blending with a static mixer and packaging immediately, or concentrating the beverage, or heat processing the beverage and then either aseptically filling into drink boxes, hot-filling into pouches, or cold filling into bottles.

The present invention is further illustrated by following examples, which are not to be construed in any way as imposing limitations upon the scope thereof. On the contrary, it is to be clearly understood that resort may be had to various other embodiments, modifications, and equivalents thereof which, after reading the description herein, may suggest themselves to those skilled in the art without departing from the scope of the appended claims.

### EXAMPLES

### Example 1

In this example, a commercial production system and a description of the process of producing a calcium-fortified orange juice are given.

379 ℓ/min (100 gallons per minute) continuous production of calcium fortified beverage is produced according to the present invention as follows. A set amount of powdered calcium hydroxide is automatically fed into a stream of water flowing at about 23 ℓ/min (6 gallons per minute) to produce a 5% solution of calcium hydroxide. After the base solution is mixed thoroughly and pumped through one or more filters, powered citric acid is mixed therewith to obtain a 7.5% concentration in the final solution. The pH range at this point is approximately 3.5 to 4. The base/acid mixture goes through a static mixer before flowing through a retaining reaction tube for a minimum residence time of 30 to 120 seconds, or preferably 50 +/-10 seconds, to produce the right form of soluble calcium citrate.

The retaining reaction hold tube is about 2.5 to 5.1 cm (1 to 2 inches) in diameter and about 30.5 m (100 feet long). The pH of the resulting solution is continuously monitored and the process is fully controlled by a programmable logic controller. The optimum pH level for the desired production of soluble calcium citrate is fully controlled by the programmable logic controller, and is preferred to be maintained at a pH of about 3.5 to 5.3, or about 4.3. The calcium citrate solution thus produced is immediately and continuously blended with orange juice flowing at a rate of approximately 379 ℓ/min (100 gallons per minute). Juice samples are collected after the orange juice is mixed with calcium citrate in a static mixer. The resultant calcium fortified orange juice contain at least 35% RDI per 237ml (8-oz) serving of calcium substantially free of calcium precipitate in the beverage.

### Example 2

In this Example, a pilot plant trial was conducted to evaluate the in-line calcium salt production and fortification system with orange juice.

In this set-up, two mixing tanks (one for the base stream and one for the acid stream), two centrifugal pumps and control valves to accurately control the flows, two flow meters, a static mixer, a variable length retaining reaction hold tube, an in-line pH meter, and a back pressure valve were used. 379 ℓ (one hundred gallons) of 10% calcium hydroxide and 379 ℓ (100 gal) of 15% citric acid were prepared in the mixing tanks. The proportions of the two streams were fixed at 1:1. After those two continuous streams were mixed in a blend manifold, the mixture was allowed to stay in the retaining reaction tube for a varying time. Retaining reaction tubes having a diameter of approximately 2.5 to 5.1 cm (1 inch and 2 inches) and lengths of from about 1.5 m to 30.5 m (5 feet to about 100 feet) were used. The flow rates of both steams were varied between 7.6 ℓ/min and 15.1 ℓ/min (2 gpm and 4 gpm) to obtain hold times ranging from 10 seconds to 120 seconds. The pH sensor at the end of the retaining reaction tube was used to measure the pH of the final product. Clear calcium citrate solutions produced at an optimum pH range of 3.5 to 5.3 were mixed with orange juice at required levels. The juice samples were then analyzed for calcium content. Calcium-fortified orange juice samples containing more than 35% RDI per 237 ml (8-oz) serving with no immediately visible calcium precipitate were produced. The optimum results were obtained with a residence time of between about 30 and 120 seconds, and especially between about 40 and 60 seconds.

## Claims

1. A method for producing a calcium fortified beverage, comprising:
a. blending an aqueous solution of a calcium containing base and an acid to form a blended acid/base solution;
b. retaining the blended acid/base solution in an in-line reaction tube for a controlled amount of time sufficient to produce a calcium salt solution and to avoid precipitation of the calcium salt; and
c. continuously adding the calcium salt solution from the in-line reaction tube to a beverage, thereby producing a calcium fortified beverage.

2. The method of Claim 1, wherein the beverage is a fruit juice.

3. The method of Claim 1, wherein the beverage is orange juice.

4. The method of Claim 1, wherein the calcium containing base is selected from calcium hydroxide, calcium carbonate, calcium oxide, calcium gluconate, calcium ascorbate, and calcium aspartate, or combinations thereof.

5. The method of Claim 1, wherein the calcium containing base is an approximately 1 to 20% w/w solution.

6. The method of Claim 1, wherein the acid is selected from citric acid, fumaric acid, malic acid, phosphoric acid, adipic acid, lactic acid, tartaric acid, and gluconic acid, or combinations thereof.

7. The method of Claim 1, wherein the acid is in an approximately 1-50% w/w solution.

8. The method of Claim 1, wherein the calcium containing base is an approximately 10% w/w calcium hydroxide solution and the acid is an approximately 15% w/w citric acid solution.

9. The method of Claim 1, wherein the storing the blended solution step lasts for about 10 to 300 seconds.

10. The method of Claim 1, wherein the storing the blended solution step lasts for about 20 to 240 seconds.

11. The method of Claim 1, wherein the storing the blended solution step lasts for about 30 to 120 seconds.

12. The method of Claim 1, wherein retaining the blended solution step further comprises monitoring the pH of the blended solution to determine the time sufficient to produce a calcium salt solution and to avoid precipitation of the calcium salt.

13. The method of Claim 12, wherein the pH indicative of the time sufficient is approximately 3.5 to 5.3.

14. The method of Claim 12, wherein the pH indicative of the time sufficient is approximately 4.3.

15. The method of Claim 1, further comprising the earlier step of mixing the calcium containing base with a stream of water.

16. The method of Claim 1, further comprising the earlier step of mixing the acid with a stream of water.

17. An apparatus for producing a calcium fortified beverage, comprising:
a. an aqueous base mixing vessel for mixing calcium containing base with water;
b. an acid mixing vessel in downstream fluid communication with the aqueous base mixing vessel for mixing acid with aqueous base solution to form aqueous acid/base solution;
c. an in-line reaction tube in downstream fluid communication with the acid mixing vessel for retaining the aqueous acid/base solution for a controlled amount of time sufficient to produce a calcium salt solution and to avoid precipitation of calcium salt; and
d. a beverage dispenser in downstream fluid communication with the in-line reaction tube for combining the calcium salt solution with beverage.

18. The apparatus of claim 17, further comprising a flow meter in upstream communication with the base mixing vessel to meter water at a required flow rate.

19. The apparatus of claim 17, further comprising an aqueous acid mixing vessel in upstream fluid communication with the acid mixing vessel for mixing acid with water prior to introduction in the acid mixing vessel to form aqueous acid/base solution.

20. The apparatus of claim 17, further comprising a pH sensor in downstream communication with the reaction tube operably connected to a flow control on the reaction tube to control the time sufficient to produce a calcium salt solution and to avoid precipitation of calcium salt.

## Patentansprüche

1. Ein Verfahren zur Erzeugung eines mit Calcium angereicherten Getränks, umfassend:
a. Vermischen einer wässrigen Lösung einer calciumhaltigen Base und einer Säure, um eine vermischte Säure/Base-Lösung zu bilden,
b. Aufbewahren der vermischten Säure/Base-Lösung in einem In-Line-Reaktionsgefäß für einen gesteuerten Zeitraum, der ausreicht, um eine Calciumsalzlösung zu erzeugen und das Ausfällen des Calciumsalzes zu verhindern, und
c. kontinuierliche Zugabe der Calciumsalzlösung aus dem In-Line-Reaktionsgefäß zu einem Getränk, wodurch ein mit Calcium angereichertes Getränk erzeugt wird.

2. Das Verfahren nach Anspruch 1, wobei das Getränk ein Fruchtsaft ist.

3. Das Verfahren nach Anspruch 1, wobei das Getränk Orangensaft ist.

4. Das Verfahren nach Anspruch 1, wobei die calciumhaltige Base ausgewählt ist aus Calciumhydroxid, Calciumcarbonat, Calciumoxid, Calciumgluconat, Calciumascorbat und Calciumaspartat oder Kombinationen davon.

5. Das Verfahren nach Anspruch 1, wobei die calciumhaltige Base eine etwa 1 %ige bis 20%ige (Gew./Gew.) Lösung ist.

6. Das Verfahren nach Anspruch 1, wobei die Säure ausgewählt ist aus Citronensäure, Fumarsäure, Äpfelsäure, Phosphorsäure, Adipinsäure, Milchsäure, Weinsäure und Gluconsäure oder Kombinationen davon.

7. Das Verfahren nach Anspruch 1, wobei die Säure in einer etwa 1-50%igen (Gew./Gew.) Lösung vorliegt.

8. Das Verfahren nach Anspruch 1, wobei die calciumhaltige Base eine etwa 10%ige (Gew./Gew.) Calciumhydroxidlösung ist und die Säure eine etwa 15%ige (Gew./Gew.) Citronensäurelösung ist.

9. Das Verfahren nach Anspruch 1, wobei der Schritt des Aufbewahrens der vermischten Lösung etwa 10 bis 300 Sekunden dauert.

10. Das Verfahren nach Anspruch 1, wobei der Schritt des Aufbewahrens der vermischten Lösung etwa 20 bis 240 Sekunden dauert.

11. Das Verfahren nach Anspruch 1, wobei der Schritt des Aufbewahrens der vermischten Lösung etwa 30 bis 120 Sekunden dauert.

12. Das Verfahren nach Anspruch 1, wobei der Schritt des Aufbewahrens der vermischten Lösung ferner die Überwachung des pH-Werts der vermischten Lösung umfasst, um die Zeit zu ermitteln, die ausreicht, um eine Calciumsalzlösung zu erzeugen und das Ausfällen des Calciumsalzes zu verhindern.

13. Das Verfahren nach Anspruch 12, wobei der pH-Wert, der die ausreichende Zeit anzeigt, etwa 3,5 bis 5,3 beträgt.

14. Das Verfahren nach Anspruch 12, wobei der pH-Wert, der die ausreichende Zeit anzeigt, etwa 4,3 beträgt.

15. Das Verfahren nach Anspruch 1, ferner umfassend den vorangehenden Schritt des Vermischens der calciumhaltigen Base mit einem Wasserstrahl.

16. Das Verfahren nach Anspruch 1, ferner umfassend den vorangehenden Schritt des Vermischens der Säure mit einem Wasserstrahl.

17. Eine Apparatur zur Erzeugung eines mit Calcium angereicherten Getränks, umfassend:
a. ein Mischgefäß für wässrige Base zum Vermischen von calciumhaltiger Base mit Wasser,
b. ein Mischgefäß für Säure in Stromabwärts-Strömungsverbindung mit dem Mischgefäß für wässrige Base zum Vermischen von Säure mit wässriger Basenlösung, um wässrige Säure/Base-Lösung zu bilden,
c. ein In-Line-Reaktionsgefäß in Stromabwärts-Strömungsverbindung mit dem Mischgefäß für Säure, um die wässrige Säure/Base-Lösung für einen gesteuerten Zeitraum, der ausreicht, um eine Calciumsalzlösung zu erzeugen und das Ausfällen von Calciumsalz zu verhindern, aufzubewahren, und
d. einen Getränke-Dispenser in Stromabwärts-Strömungsverbindung mit dem In-Line-Reaktionsgefäß, um die Calciumsalzlösung mit Getränk zu kombinieren.

18. Die Apparatur nach Anspruch 17, die ferner einen Durchflussmesser in Stromaufwärtsverbindung mit dem Mischgefäß für Base umfasst, um Wasser mit einer benötigten Strömungsgeschwindigkeit einzuspeisen.

19. Die Apparatur nach Anspruch 17, die ferner ein Mischgefäß für wässrige Säure in Stromaufwärts-Strömungsverbindung mit dem Mischgefäß für Säure enthält, um Säure mit Wasser vor dem Einspeisen in das Mischgefäß für Säure zu vermischen, um eine Lösung aus wässriger Säure/Base zu bilden.

20. Die Apparatur nach Anspruch 17, die ferner einen pH-Sensor in Stromabwärtsverbindung mit dem Reaktionsgefäß in Wirkverbindung mit einem Strömungsregler an dem Reaktionsgefäß enthält, um die Zeit zu steuern, die ausreicht, um eine Calciumsalzlösung zu erzeugen und das Ausfällen von Calciumsalz zu verhindern.

## Revendications

1. Procédé de production d'une boisson enrichie en calcium, comprenant :
a. le mélange d'une solution aqueuse d'une base contenant du calcium et d'un acide pour former une solution mixte acide/base ;
b. la conservation de la solution mixte acide/base dans un tube de réaction en ligne formant une quantité de temps contrôlée suffisante pour produire une solution de sel de calcium et éviter la précipitation du sel de calcium ; et
c. l'ajout continu de la solution de sel de calcium depuis le tube de réaction en ligne vers une boisson, pour produire ainsi une boisson enrichie en calcium.

2. Procédé selon la revendication 1, dans lequel la boisson est un jus de fruit.

3. Procédé selon la revendication 1, dans lequel la boisson est du jus d'orange.

4. Procédé selon la revendication 1, dans lequel la base contenant du calcium est choisie parmi l'hydroxyde de calcium, le carbonate de calcium, l'oxyde de calcium, le gluconate de calcium, l'ascorbate de calcium et l'aspartate de calcium, ou des combinaisons de ceux-ci.

5. Procédé selon la revendication 1, dans lequel la base contenant du calcium est une solution d'approximativement 1 à 20 % p/p.

6. Procédé selon la revendication 1, dans lequel l'acide est choisi parmi l'acide citrique, l'acide fumarique, l'acide malique, l'acide phosphorique, l'acide adipique, l'acide lactique, l'acide, tartrique et l'acide gluconique, ou des combinaisons de ceux-ci.

7. Procédé selon la revendication 1, dans lequel l'acide est une solution d'approximativement 1 à 50 % p/p.

8. Procédé selon la revendication 1, dans lequel la base contenant du calcium est une solution d'hydroxyde de calcium d'approximativement 10 % p/p et l'acide est une solution d'acide citrique d'approximativement 15 % p/p.

9. Procédé selon la revendication 1, dans lequel l'étape de stockage de la solution mixte dure environ 10 à 300 secondes.

10. Procédé selon la revendication 1, dans lequel l'étape de stockage de la solution mixte dure environ 20 à 240 secondes.

11. Procédé selon la revendication 1, dans lequel l'étape de stockage de la solution mixte dure environ 30 à 120 secondes.

12. Procédé selon la revendication 1, dans lequel l'étape de conservation de la solution mixte comprend en outre la surveillance du pH de la solution mixte pour déterminer le temps suffisant pour produire une solution de sel de calcium et éviter la précipitation du sel de calcium.

13. Procédé selon la revendication 12, dans lequel le pH indicateur du temps suffisant est d'approximativement 3,5 à 5,3.

14. Procédé selon la revendication 12, dans lequel le pH indicateur du temps suffisant est d'approximativemént 4,3.

15. Procédé selon la revendication 1, comprenant en outre l'étape préalable de mélange de la base contenant du calcium avec un courant d'eau.

16. Procédé selon la revendication 1, comprenant en outre l'étape préalable de mélange de l'acide avec un courant d'eau.

17. Appareil de production d'une boisson enrichie en calcium, comprenant :
a. un récipient de mélange de la base aqueuse pour mélanger la base contenant du calcium avec de l'eau ;
b. un récipient de mélange de l'acide en communication fluidique en aval avec le récipient de mélange de la base aqueuse pour mélanger l'acide avec la solution de base aqueuse pour former une solution acide/base aqueuse ;
c. un tube de réaction en ligne en communication, fluidique en aval avec le récipient de mélange de l'acide pour conserver la solution acide/base aqueuse pendant une quantité de temps contrôlée suffisante pour produire une solution de sel de calcium et éviter la précipitation du sel de calcium ; et
d. un distributeur de boisson en communication fluidique en aval avec le tube de réaction en ligne pour combiner la solution de sel de calcium avec la boisson.

18. Appareil selon la revendication 17, comprenant en outre un débitmêtre en communication en amont avec le récipient de mélange de la base pour mesurer la quantité d'eau à un débit requis.

19. Appareil selon la revendication 17, comprenant en outre un récipient de mélange de l'acide aqueux en communication fluidique en amont avec le récipient de mélange de l'acide pour mélanger l'acide avec l'eau avant introduction dans le récipient de mélange de l'acide pour former une solution acide/base aqueuse.

20. Appareil selon la revendication 17, comprenant en outre un détecteur de pH en communication en aval avec le tube de réaction relié de manière fonctionnelle à un dispositif de contrôle de l'écoulement sur le tube de réaction pour contrôler le temps suffisant pour produire une solution de sel de calcium et éviter la précipitation du sel de calcium.
